# FASCICULE DE BREVET EUROPEEN

(11) **EP 3 879 397 B1**
(45) Date de publication et mention de la délivrance du brevet: **24.04.2024**
(21) Numéro de dépôt: 21161226.2
(22) Date de dépôt: 08.03.2021
(51) Int. Cl.: G06F 8/654, H04Q 9/00, G01D 4/00

(54) **PROCEDE DE TELECHARGEMENT D'UN LOGICIEL DANS UNE PLURALITE DE COMPTEURS**
VERFAHREN ZUM HERUNTERLADEN EINER SOFTWARE IN EINER VIELZAHL VON ZÄHLERN
METHOD FOR DOWNLOADING SOFTWARE IN A PLURALITY OF METERS

(30) Priorité: 10.03.2020 FR 2002361
(43) Date de publication de la demande: 15.09.2021
(73) Titulaire: Sagemcom Energy & Telecom SAS, 92270 Bois-Colombes (FR)
(72) Inventeur: TEBOULLE, Henri, 92500 RUEIL MALMAISON (FR); HARNAY, Franck, 92500 RUEIL MALMAISON (FR)
(74) Mandataire: Cabinet Boettcher

(56) Documents cités:
- EP-A1- 2 661 050
- EP-A1- 3 182 281
- WO-A1-2005/015890
- US-A1- 2014 173 579

## Description

L'invention concerne le domaine des réseaux de gestion d'énergie.

### ARRIERE PLAN DE L'INVENTION

On assiste aujourd'hui, dans un grand nombre de pays, à un déploiement massif, sur tout le territoire, de gigantesques réseaux de compteurs communicants (compteurs de gaz, d'eau, d'électricité).

Chacun de ces réseaux comprend typiquement plusieurs millions de compteurs, ainsi que des concentrateurs de données et des Systèmes d'Information (ou SI). Dans un réseau comprenant plusieurs millions de compteurs, on trouve typiquement plusieurs milliers de concentrateurs de données.

Chacune de ces entités (compteur, concentrateur de données, SI) est munie de moyens de communication qui peuvent utiliser des technologies diverses (communication radio selon différents protocoles, communication sur des réseaux cellulaires, courants porteurs en ligne, etc.) et qui permettent de mettre en oeuvre au sein du réseau des transmissions montantes et descendantes.

On utilise ces moyens de communication notamment pour télécharger des logiciels dans les compteurs. Le logiciel téléchargé est par exemple un *firmware* (que l'on traduit parfois par micrologiciel ou microprogramme).

Dans un réseau de compteurs de gaz existant qui est aujourd'hui en cours de déploiement, on utilise pour télécharger un *firmware* dans tous les compteurs dudit réseau une méthode qui consiste à associer à chaque compteur un unique concentrateur de données, et à envoyer sur une semaine le *firmware* à télécharger à tous les compteurs via les concentrateurs de données associés. Chaque compteur reçoit préalablement du concentrateur de données associé, via une transmission en monodiffusion (en *unicast*), une date de téléchargement unique (comprenant un jour et une heure) qui définit un rendez-vous pour effectuer le téléchargement.

Il arrive fréquemment que le téléchargement échoue. Une « méthode balai » est donc mise en oeuvre pour recommencer le processus pour les compteurs de gaz non téléchargés. On constate malgré tout que de nombreux compteurs de gaz n'ont pas été téléchargés correctement. Cette constatation est faite facilement : en effet, dans le réseau en question, chaque compteur de gaz précise la version du *firmware* en vigueur dans chaque trame de collecte qu'il transmet régulièrement au concentrateur de données associé.

Le document EP2661050 A1 (ITTRON INC) divulgue un procédé de transmission de données et mise à jour de plusieurs compteurs via un concentrateur de données. Chaque sous-réseau comprend un concentrateur de données associé à plusieurs compteurs.

### OBJET DE L'INVENTION

L'invention a pour objet de télécharger rapidement et efficacement un logiciel dans un grand nombre de compteurs communicants.

### RESUME DE L'INVENTION

L'invention est définie par les revendications associées.

En vue de la réalisation de ce but, on propose un procédé de téléchargement, mis en oeuvre dans un serveur tel qu'un serveur d'un Système d'Information et destiné à télécharger un logiciel dans une pluralité de compteurs via une pluralité de concentrateurs de données, comprenant les étapes de :
- cartographier les positions des compteurs et des concentrateurs de données ;
- définir une pluralité de sous-réseaux comprenant chacun une pluralité de concentrateurs de données ;
- associer à chaque sous-réseau au moins une date de téléchargement comprenant un jour et une heure, la date de téléchargement de chaque sous-réseau étant différente des dates de téléchargement des autres sous-réseaux ;
- transmettre aux concentrateurs de données de chaque sous-réseau la date de téléchargement associée audit sous-réseau de sorte que, lorsqu'arrive la date de téléchargement associée audit sous-réseau, tous les concentrateurs de données dudit sous-réseau téléchargent le logiciel dans tous les compteurs qui sont positionnés à portée de communication des concentrateurs de données dudit sous-réseau.

Ainsi, à la date de téléchargement associée à un sous-réseau, les concentrateurs de données dudit sous-réseau téléchargent le logiciel dans tous les compteurs qui sont à portée de communication desdits concentrateurs de données. Chaque compteur, qui est généralement visible par plusieurs concentrateurs de données appartenant à des sous-réseaux distincts, va donc être téléchargé par ces différents concentrateurs de données à des dates de téléchargement distinctes.

Une fois que les concentrateurs de données de tous les sous-réseaux ont effectué le téléchargement, c'est-à-dire une fois que les dates de téléchargement successives sont toutes passées, la probabilité que tous les compteurs aient été téléchargés correctement est très importante. Par ailleurs, lorsque le procédé de téléchargement selon l'invention est mis en oeuvre, on peut estimer très précisément la durée totale nécessaire pour télécharger tous les compteurs, puisque le procédé s'achève lorsque les concentrateurs de données de tous les sous-réseaux ont réalisé les téléchargements programmés. Contrairement à la solution existante, il n'est pas nécessaire de mettre en oeuvre la méthode balai pour programmer des téléchargements supplémentaires.

On propose de plus un procédé tel que précédemment décrit, dans lequel les sous-réseaux sont définis de sorte que chaque concentrateur de données de chaque sous-réseau est positionné hors de portée de communication des autres concentrateurs de données dudit sous-réseau.

On propose de plus un procédé tel que précédemment décrit, dans lequel les sous-réseaux sont définis de sorte que chaque compteur est positionné à portée de communication d'au plus un concentrateur de données par sous-réseau.

On propose de plus un procédé tel que précédemment décrit, dans lequel le logiciel est transmis à chaque concentrateur de données de chaque sous-réseau lors de la transmission audit concentrateur de données de la date de téléchargement associée audit sous-réseau.

On propose de plus un procédé tel que précédemment décrit, dans lequel la transmission à chaque concentrateur de données de chaque sous-réseau de la date de téléchargement associée audit sous-réseau est une transmission en monodiffusion.

On propose de plus un procédé tel que précédemment décrit, dans lequel, pour chaque sous-réseau, le téléchargement du logiciel par chaque concentrateur de données dudit sous-réseau dans les compteurs qui sont positionnés à portée de communication dudit concentrateur de données est réalisé via une transmission en multidiffusion.

On propose de plus un procédé tel que précédemment décrit, dans lequel, lorsqu'arrive la date de téléchargement associée à un sous-réseau, chaque compteur, qui est à positionné à portée de communication d'un concentrateur de données dudit sous-réseau, se réveille et ouvre une fenêtre d'écoute au cours de laquelle le logiciel est téléchargé dans le compteur par ledit concentrateur de données.

On propose de plus un procédé tel que précédemment décrit, dans lequel, si le téléchargement du logiciel dans le compteur a été correctement effectué, le compteur ne se réveillera pas s'il reçoit à nouveau une date de téléchargement pour le même logiciel.

On propose en outre un Système d'Information comprenant un composant de traitement dans lequel est mis en oeuvre le procédé de téléchargement qui vient d'être décrit.

On propose aussi un programme d'ordinateur comprenant des instructions qui conduisent le Système d'Information précédemment décrit à exécuter les étapes du procédé de téléchargement qui vient d'être décrit.

On propose aussi un support d'enregistrement lisible par ordinateur, sur lequel est enregistré le programme d'ordinateur qui vient d'être décrit.

On propose de plus un procédé de téléchargement, mis en oeuvre dans un concentrateur de données et destiné à télécharger un logiciel dans une pluralité de compteurs qui sont positionnés à portée de communication dudit concentrateur de données, comprenant les étapes de :
- acquérir le logiciel ;
- acquérir au moins une date de téléchargement comprenant un jour et une heure ;
- transmettre aux compteurs la date de téléchargement ;
- lorsqu'arrive la date de téléchargement, télécharger le logiciel dans tous les compteurs.

On propose de plus un procédé tel que précédemment décrit, dans lequel le concentrateur de données acquiert le logiciel lors de l'acquisition de la date de téléchargement.

On propose de plus un procédé tel que précédemment décrit, dans lequel la transmission à chaque compteur de la date de téléchargement est une transmission en monodiffusion.

On propose de plus un procédé tel que précédemment décrit, dans lequel le téléchargement du logiciel dans les compteurs est réalisé via une transmission en multidiffusion.

On propose de plus un procédé tel que précédemment décrit, dans lequel, lorsqu'arrive la date de téléchargement, chaque compteur, qui est à portée de communication du concentrateur de données, se réveille et ouvre une fenêtre d'écoute au cours de laquelle le logiciel est téléchargé dans le compteur par le concentrateur de données.

On propose de plus un procédé tel que précédemment décrit, dans lequel, si le téléchargement du logiciel dans le compteur a été correctement effectué, le compteur ne se réveillera pas s'il reçoit à nouveau une date de téléchargement pour le même logiciel.

On propose de plus un concentrateur de données, dans lequel est mis en oeuvre le procédé de téléchargement qui vient d'être décrit.

On propose en outre un programme d'ordinateur comprenant des instructions qui conduisent le concentrateur de données tel que précédemment décrit à exécuter les étapes du procédé de téléchargement qui vient d'être décrit.

On propose de plus un support d'enregistrement lisible par ordinateur, sur lequel est enregistré le programme d'ordinateur qui vient d'être décrit.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :
[Fig. 1] la figure 1 représente des compteurs et des concentrateurs de données ;
[Fig. 2] la figure 2 représente, lors de la mise en oeuvre du procédé de téléchargement selon l'invention, des échanges de commandes et de messages entre un SI, des concentrateurs de données et des compteurs.

### DESCRIPTION DETAILLEE DE L'INVENTION

Le procédé de téléchargement selon l'invention permet de réaliser un téléchargement ordonnancé d'un logiciel dans une pluralité de compteurs via une pluralité de concentrateurs de données. Le procédé de téléchargement est mis en oeuvre dans un réseau qui, outre les compteurs et les concentrateurs de données, comprend un Système d'Information (SI) comportant un ou plusieurs serveurs.

Les compteurs sont par exemple des compteurs de gaz. Le logiciel est par exemple un *firmware.*

Chaque compteur comprend un premier module de communication. Chaque concentrateur de données comprend un premier module de communication et un deuxième module de communication. Le SI comprend un deuxième module de communication.

Les compteurs et les concentrateurs de données peuvent communiquer via les premiers modules de communication. Les concentrateurs de données et le SI peuvent communiquer via les deuxièmes modules de communication.

Les modules de communication peuvent utiliser des technologies diverses. Ici, les premiers modules de communication des compteurs et des concentrateurs de données sont adaptés à communiquer via une communication radio utilisant le standard *Wize* opérant à la fréquence de 169MHz, alors que les deuxièmes modules de communication des concentrateurs de données et du SI sont adaptés à communiquer via un réseau 2G, 3G ou 4G.

Chaque entité parmi les concentrateurs de données, les compteurs et le SI comprend au moins un composant de traitement adapté à exécuter des instructions d'un programme pour mettre en oeuvre au moins certaines des étapes du procédé de téléchargement qui vont être décrites ci-après. Le composant de traitement peut bien sûr être différent selon les entités, et est par exemple un processeur, un microcontrôleur, ou bien un circuit logique programmable tel qu'un FPGA (pour *Field Programmable Gate Arrays*) ou un ASIC (pour *Application Spécifie Integrated Circuit*)*.*

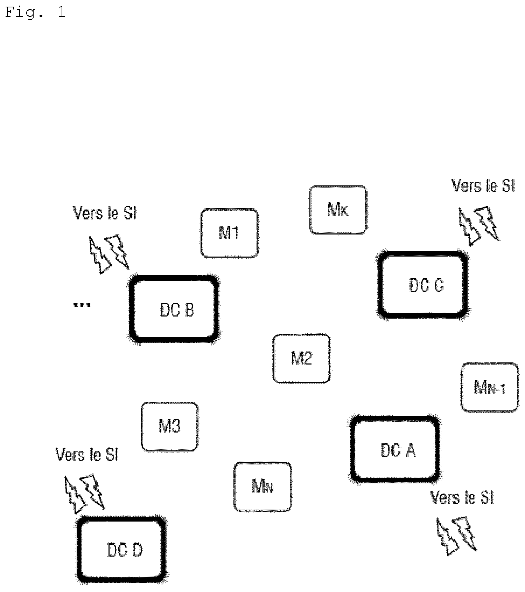

On voit sur la figure 1 une pluralité de compteurs M1, M2, ... , MK,..., MN qui sont chacun positionnés à portée de communication de plusieurs concentrateurs de données.

Ici, lorsque l'on dit que deux entités sont « positionnées à portée de communication » l'une de l'autre, on entend que les moyens de communication dont sont équipées les deux entités et le positionnement de ces deux entités permettent non seulement que ces deux entités se détectent (ou tout au moins que l'une de ces deux entités détecte l'autre), mais aussi que ces deux entités soient capables de communiquer.

Ainsi, sur la figure 1 :
- le compteur M1 est positionné à portée de communication des concentrateurs de données DC B et DC C ;
- le compteur M2 est positionné à portée de communication des concentrateurs de données DC A, DC B et DC C ;
- le compteur M3 est positionné à portée de communication des concentrateurs de données DC A, DC B et DC D ;
- le compteur MK est positionné à portée de communication des concentrateurs de données DC B et DC C ;
- le compteur MN-1 est positionné à portée de communication des concentrateurs de données DC A et DC C ;
- le compteur MN est positionné à portée de communication des concentrateurs de données DC A et DC D.

Le fait que chaque compteur soit positionné à portée de communication d'une pluralité de concentrateurs de données correspond bien à la situation effective d'un réseau de compteurs réel. En effet, dans un réseau de compteurs de gaz très étendu, susceptible de comporter plusieurs millions de compteurs, le nombre de concentrateurs de données est lui aussi très important et la répartition géographique des concentrateurs de données est telle que chaque compteur « voit » (c'est-à-dire est positionné à portée de communication) effectivement et de manière générale plusieurs concentrateurs de données.

Le procédé de téléchargement consiste tout d'abord à cartographier les positions des compteurs et des concentrateurs de données, puis à définir une pluralité de sous-réseaux comprenant chacun une pluralité de concentrateurs de données. Ces sous-réseaux sont définis chacun par une méthode semblable à un maillage géographique de type hexagonal (comme pour le GSM). Ces opérations sont ici réalisées dans le SI.

Les sous-réseaux de concentrateurs de données sont définis de sorte que chaque concentrateur de données de chaque sous-réseau est positionné hors de portée de communication des autres concentrateurs de données dudit sous-réseau. Ainsi, dans un sous-réseau, les concentrateurs de données ne se « voient » pas.

De plus, les sous-réseaux de concentrateurs de données sont définis de sorte que chaque compteur est positionné à portée de communication d'au plus un concentrateur de données par sous-réseau.

Par conséquent, sur la figure 1, les concentrateurs de données DC A, DC B, DC C et DC D appartiennent à des sous-réseaux distincts.

Le procédé de téléchargement consiste alors à associer à chaque sous-réseau au moins une date de téléchargement comprenant un jour et une heure, la date de téléchargement de chaque sous-réseau étant différente des dates de téléchargement des autres sous-réseaux.

Ici, par « date de téléchargement », on entend donc une heure précise d'une journée particulière (et on peut bien sûr avoir plusieurs dates de téléchargement par jour).

Le SI transmet alors aux concentrateurs de données de chaque sous-réseau la date de téléchargement associée audit sous-réseau. Chaque concentrateur de données transmet alors la date de téléchargement aux compteurs qui sont positionnés à portée de transmission dudit concentrateur de données.

La transmission par le SI à chaque concentrateur de données de chaque sous-réseau de la date de téléchargement associée audit sous-réseau est une transmission en monodiffusion. De même, la transmission par chaque concentrateur de données de la date de téléchargement aux compteurs positionnés à portée de communication dudit concentrateur de données est une transmission en monodiffusion.

Le SI transmet donc la date de téléchargement à chaque concentrateur de données par une commande *unicast.* Lorsque cette commande a été correctement reçue, le concentrateur de données en question renvoie une trame d'acquittement au SI. Ces échanges de commandes et de trames entre le SI et les concentrateurs de données utilisent des requêtes *http POST* et le protocole *TR-69.* En parallèle, chaque concentrateur de données transmet à tous les compteurs qui sont positionnés à portée de transmission dudit concentrateur de données, via une communication radio utilisant le standard *Wize* opérant à la fréquence de 169MHz, la date de téléchargement par une commande *unicast.* Les compteurs ouvrent systématiquement une fenêtre d'écoute lorsqu'ils émettent une trame de collecte, ce qui leur permet de toujours recevoir les commandes *unicast* qui leur sont envoyées par les concentrateurs de données.

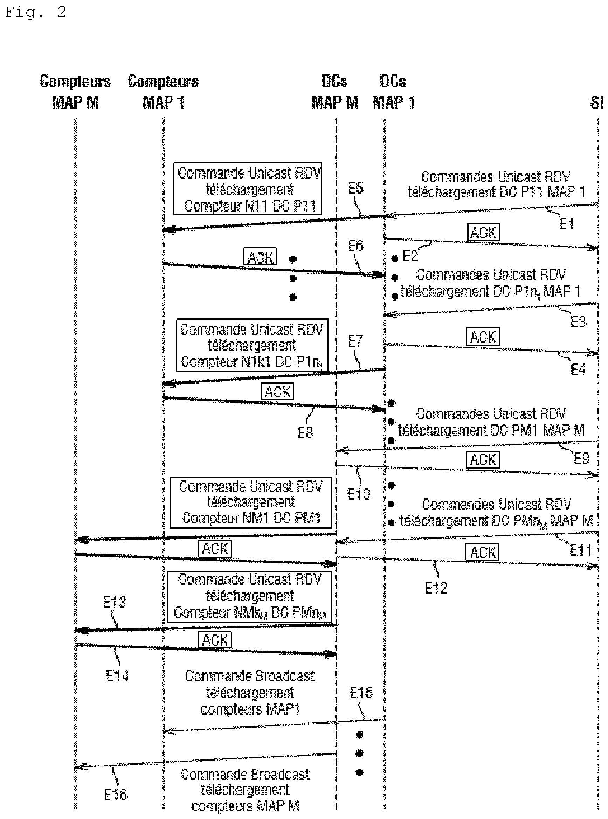

La figure 2 illustre une configuration dans laquelle M sous-réseaux de concentrateurs de données ont été constitués : MAP 1, MAP 2, ..., MAP M.

Le sous-réseau MAP 1 comprend n₁ concentrateurs de données (référencés P11 à P1n₁) ; k₁ compteurs (référencés N11 à N1k₁) sont positionnés à portée de communication de ces n₁ concentrateurs de données.

Le sous-réseau MAP 2 comprend n₂ concentrateurs de données (référencés P21 à P2n₂) ; k₂ compteurs (référencés N21 à N2k₂) sont positionnés à portée de communication de ces n₂ concentrateurs de données.

Le sous-réseau MAP M comprend n_{M} concentrateurs de données (référencés PM1 à PMn_{M}) ; k_{M} compteurs (référencés NM1 à NMk_{M}) sont positionnés à portée de communication de ces n_{M} concentrateurs de données.

Le SI transmet donc tout d'abord la commande *unicast* comprenant la date de téléchargement associée au sous-réseau MAP 1 au concentrateur de données P11 (étape E1), qui lui renvoie une trame d'acquittement (étape E2). Ces opérations sont répétées pour tous les concentrateurs de données du sous-réseau MAP 1, et s'achèvent, pour le sous-réseau MAP 1, lorsque le SI a transmis la commande *unicast* comprenant la date de téléchargement associée au sous-réseau MAP 1 au concentrateur de données P1n₁ (étape E3), qui lui renvoie une trame d'acquittement (étape E4).

Parallèlement, toujours pour le sous-réseau MAP 1, le concentrateur de données P11 du sous-réseau MAP1 transmet au compteur N11 la commande *unicast* comprenant la date de téléchargement associée au sous-réseau MAP 1 (étape E5). Le compteur N11 lui renvoie une trame d'acquittement (étape E6). Ces opérations sont répétées pour tous les concentrateurs de données du sous-réseau MAP 1 et pour tous les compteurs associés. En ce qui concerne le sous-réseau MAP 1, ces opérations s'achèvent une fois que le concentrateur de données P1n₁ a transmis la commande *unicast* au compteur N1k₁ (étape E7) et que celui-ci lui a envoyé une trame d'acquittement (étape E8).

Ces opérations sont par ailleurs répétées pour tous les sous-réseaux, jusqu'au sous-réseau MAP M.

Ainsi, pour le sous-réseau MAP M, le SI transmet la commande *unicast* comprenant la date de téléchargement associée au sous-réseau MAP M au concentrateur de données PM1 (étape E9), qui lui renvoie une trame d'acquittement (étape E10). Ces opérations sont répétées pour tous les concentrateur de données du sous-réseau MAP M et pour tous les compteurs associés, jusqu'à ce que le SI ait transmis la commande *unicast* comprenant la date de téléchargement associée au sous-réseau MAP M au concentrateur de données PMn_{M} (étape E11), qui lui renvoie la trame d'acquittement (étape E12), et jusqu'à ce que le concentrateur de données PMn_{M} ait transmis la commande *unicast* au compteur NMk_{M} (étape E13), qui lui renvoie la trame d'acquittement (étape E14).

Plusieurs dates de téléchargement correspondant à plusieurs sous-réseaux sont donc envoyées à chaque compteur qui est positionné à portée de communication de concentrateurs de données appartenant à ces sous-réseaux (distincts). Chacun de ces compteurs acquiert donc plusieurs dates de téléchargement distinctes.

On note que le logiciel (le *firmware*) lui-même est transmis à chaque concentrateur de données de chaque sous-réseau lors de la transmission audit concentrateur de données de la date de téléchargement associée audit sous-réseau, c'est-à-dire lors de la transmission par le SI des commandes *unicast* intégrant les dates de téléchargement.

Puis, pour chaque sous-réseau, lorsqu'arrive la date de téléchargement associée audit sous-réseau, tous les concentrateurs de données dudit sous-réseau téléchargent le logiciel dans tous les compteurs qui sont positionnées à portée de communication des concentrateurs de données dudit sous-réseau.

Pour chaque sous-réseau, le téléchargement du logiciel par les concentrateurs de données dudit sous-réseau dans les compteurs qui sont positionnés à portée de communication desdits concentrateurs de données est réalisé via une transmission en multidiffusion (en *broadcast*). Le téléchargement du logiciel dans les compteurs est réalisé via une communication radio utilisant le standard *Wize* opérant à la fréquence de 169MHz.

Ainsi, sur la figure 2, à la date de téléchargement associée au sous-réseau MAP 1, les concentrateurs de données du sous-réseau MAP 1 téléchargent le logiciel dans les compteurs positionnés à portée de communication des concentrateurs de données du sous-réseau MAP 1 (étape E15).

Cette opération est aussi réalisée pour les sous-réseaux MAP 2, MAP 3, etc., jusqu'au sous-réseau MAP M : à la date de téléchargement associée au sous-réseau MAP M, les concentrateurs de données du sous-réseau MAP M téléchargent le logiciel dans les compteurs positionnés à portée de communication des concentrateurs de données du sous-réseau MAP M (étape E16).

Plus précisément, lorsqu'arrive la date de téléchargement associée à un sous-réseau, chaque compteur, qui est positionné à portée de communication d'un concentrateur de données dudit sous-réseau, se réveille et ouvre une fenêtre d'écoute au cours de laquelle le logiciel est téléchargé dans le compteur par ledit concentrateur de données.

Ainsi, à chaque date de téléchargement, qui correspond à un jour et à une heure de « rendez-vous » pour les compteurs positionnés à portée de communication des concentrateurs de données d'un sous-réseau et pour lesdits concentrateurs de données, les compteurs concernés se réveillent et se mettent en écoute d'un téléchargement, sachant qu'ils sont à l'heure avec une certaine précision et qu'ils tiennent compte de l'incertitude de l'heure pour anticiper l'ouverture et calibrer la fenêtre d'écoute.

On note que, pour chaque compteur, si le téléchargement du logiciel dans le compteur a été correctement effectué, le compteur ne se réveillera pas s'il reçoit à nouveau une date de téléchargement pour ledit logiciel.

L'invention repose donc sur l'hypothèse que tous les concentrateurs de données du réseau sont utiles pour joindre les compteurs. Les téléchargements sont donc programmés sur tous les concentrateurs de données. De cette manière, tous les compteurs ont beaucoup plus de chance d'être téléchargés lors des dates de téléchargement programmées. On évite ainsi la « méthode balai », qui peut malgré tout être conservée par acquis de conscience pour les (très) rares compteurs qui n'auraient pas été téléchargés.

Bien entendu, l'invention n'est pas limitée au mode de réalisation décrit mais englobe toute variante entrant dans le champ de l'invention telle que définie par les revendications.

Dans cette description, on a associé une seule date de téléchargement à chaque sous-réseau. Il est possible d'associer plusieurs dates de téléchargement à chaque sous-réseau (ou à certains sous-réseaux), en veillant à ce que toutes ces dates de téléchargement soient bien distinctes les unes des autres, pour éviter tout « télescopage ».

L'invention peut être mise en oeuvre avec tout type de compteur : compteur d'eau, de gaz, d'électricité, etc.

## Revendications

1. Procédé de téléchargement, mis en oeuvre dans un serveur tel qu'un serveur d'un Système d'Information et destiné à télécharger un logiciel dans une pluralité de compteurs (M1, M2, ..., MN) via une pluralité de concentrateurs de données (DC A, DC B, ...), comprenant les étapes de :
- cartographier les positions des compteurs et des concentrateurs de données ;
- définir une pluralité de sous-réseaux comprenant chacun une pluralité de concentrateurs de données, les compteurs comprenant des compteurs positionnés chacun à portée de communication de concentrateurs de données appartenant à plusieurs sous-réseaux distincts ;
- associer à chaque sous-réseau au moins une date de téléchargement comprenant un jour et une heure, la date de téléchargement de chaque sous-réseau étant différente des dates de téléchargement des autres sous-réseaux ;
- transmettre aux concentrateurs de données de chaque sous-réseau la date de téléchargement associée audit sous-réseau de sorte que, lorsqu'arrive la date de téléchargement associée audit sous-réseau, tous les concentrateurs de données dudit sous-réseau téléchargent le logiciel dans tous les compteurs qui sont positionnés à portée de communication des concentrateurs de données dudit sous-réseau.

2. Procédé selon la revendication 1, dans lequel les sous-réseaux sont définis de sorte que chaque concentrateur de données de chaque sous-réseau est positionné hors de portée de communication des autres concentrateurs de données dudit sous-réseau.

3. Procédé selon l'une des revendications précédentes, dans lequel les sous-réseaux sont définis de sorte que chaque compteur est positionné à portée de communication d'au plus un concentrateur de données par sous-réseau.

4. Procédé selon l'une des revendications précédentes, dans lequel le logiciel est transmis à chaque concentrateur de données de chaque sous-réseau lors de la transmission audit concentrateur de données de la date de téléchargement associée audit sous-réseau.

5. Procédé selon l'une des revendications précédentes, dans lequel la transmission à chaque concentrateur de données de chaque sous-réseau de la date de téléchargement associée audit sous-réseau est une transmission en monodiffusion.

6. Procédé selon l'une des revendications précédentes, dans lequel, pour chaque sous-réseau, le téléchargement du logiciel par chaque concentrateur de données dudit sous-réseau dans les compteurs qui sont positionnés à portée de communication dudit concentrateur de données est réalisé via une transmission en multidiffusion.

7. Procédé selon l'une des revendications précédentes, dans lequel, lorsqu'arrive la date de téléchargement associée à un sous-réseau, chaque compteur, qui est à positionné à portée de communication d'un concentrateur de données dudit sous-réseau, se réveille et ouvre une fenêtre d'écoute au cours de laquelle le logiciel est téléchargé dans le compteur par ledit concentrateur de données.

8. Procédé selon la revendication 7, dans lequel, si le téléchargement du logiciel dans le compteur a été correctement effectué, le compteur ne se réveillera pas s'il reçoit à nouveau une date de téléchargement pour le même logiciel.

9. Système d'Information comprenant un composant de traitement dans lequel est mis en oeuvre le procédé de téléchargement selon l'une des revendications précédentes.

10. Programme d'ordinateur comprenant des instructions qui conduisent le Système d'Information selon la revendication 9 à exécuter les étapes du procédé de téléchargement selon l'une des revendications 1 à 8.

11. Support d'enregistrement lisible par ordinateur, sur lequel est enregistré le programme d'ordinateur selon la revendication 10.

12. Procédé de téléchargement, mis en oeuvre dans un concentrateur de données et destiné à télécharger un logiciel dans une pluralité de compteurs qui sont positionnés à portée de communication dudit concentrateur de données, comprenant les étapes de :
- acquérir le logiciel ;
- acquérir au moins une date de téléchargement comprenant un jour et une heure ;
le logiciel et la date de téléchargement étant transmis au concentrateur de données par un serveur tel qu'un serveur d'un Système d'Information ;
- transmettre aux compteurs la date de téléchargement ;
- lorsqu'arrive la date de téléchargement, télécharger le logiciel dans tous les compteurs.

13. Procédé selon la revendication 12, dans lequel le concentrateur de données acquiert le logiciel lors de l'acquisition de la date de téléchargement.

14. Procédé selon l'une des revendications précédentes, dans lequel la transmission à chaque compteur de la date de téléchargement est une transmission en monodiffusion.

15. Procédé selon l'une des revendications précédentes, dans lequel le téléchargement du logiciel dans les compteurs est réalisé via une transmission en multidiffusion.

16. Procédé selon l'une des revendications précédentes, dans lequel, lorsqu'arrive la date de téléchargement, chaque compteur, qui est à portée de communication du concentrateur de données, se réveille et ouvre une fenêtre d'écoute au cours de laquelle le logiciel est téléchargé dans le compteur par le concentrateur de données.

17. Procédé selon la revendication 16, dans lequel, si le téléchargement du logiciel dans le compteur a été correctement effectué, le compteur ne se réveillera pas s'il reçoit à nouveau une date de téléchargement pour le même logiciel.

18. Concentrateur de données, dans lequel est mis en oeuvre le procédé de téléchargement selon l'une des revendications 12 à 17.

19. Programme d'ordinateur comprenant des instructions qui conduisent le concentrateur de données selon la revendication 18 à exécuter les étapes du procédé de téléchargement selon l'une des revendications 12 à 17.

20. Support d'enregistrement lisible par ordinateur, sur lequel est enregistré le programme d'ordinateur selon la revendication 19.

## Patentansprüche

1. Verfahren zum Herunterladen, das in einem Server wie z. B. einem Server eines Informationssystems durchgeführt wird und dazu bestimmt ist, eine Software in eine Vielzahl von Zählern (M1, M2, ..., MN) über eine Vielzahl von Datenkonzentratoren (DC A, DC B, ...) herunterzuladen, umfassend die Schritte:
- Kartografieren der Positionen der Zähler und der Datenkonzentratoren;
- Definieren einer Vielzahl von Unternetzen, die jeweils eine Vielzahl von Datenkonzentratoren umfassen, wobei die Zähler Zähler umfassen, die jeweils in Kommunikationsreichweite von Datenkonzentratoren positioniert sind, die zu mehreren verschiedenen Unternetzen gehören;
- Verbinden mindestens eines Download-Datums, das einen Tag und eine Uhrzeit umfasst, mit jedem Unternetz, wobei das Download-Datum jedes Unternetzes unterschiedlich zu den Download-Daten der anderen Unternetze ist;
- Übertragen des mit dem genannten Unternetz verbundenen Download-Datums an die Datenkonzentratoren jedes Unternetzes derart, dass, wenn das mit dem genannten Unternetz verbundene Download-Datum ankommt, alle Datenkonzentratoren des genannten Unternetzes die Software in alle Zähler herunterladen, die in Kommunikationsreichweite der Datenkonzentratoren des genannten Unternetzes positioniert sind.

2. Verfahren nach Anspruch 1, bei dem die Unternetze derart definiert sind, dass jeder Datenkonzentrator jedes Unternetzes außerhalb der Kommunikationsreichweite der anderen Datenkonzentratoren des genannten Unternetzes positioniert ist.

3. Verfahren nach einem der vorhergehenden Ansprüche, bei dem die Unternetze derart definiert sind, dass jeder Zähler in Kommunikationsreichweite von höchstens einem Datenkonzentrator pro Unternetz positioniert ist.

4. Verfahren nach einem der vorhergehenden Ansprüche, bei dem die Software an jeden Datenkonzentrator jedes Unternetzes während der Übertragung des mit dem genannten Unternetz verbundenen Download-Datums an den Datenkonzentrator übertragen wird.

5. Verfahren nach einem der vorhergehenden Ansprüche, bei dem die Übertragung des mit dem Unternetz verbundenen Download-Datums an jeden Datenkonzentrator jedes Unternetzes eine Unicast-Übertragung ist.

6. Verfahren nach einem der vorhergehenden Ansprüche, bei dem für jedes Unternetz das Herunterladen der Software durch jeden Datenkonzentrator des genannten Unternetzes in die Zähler, die in Kommunikationsreichweite des genannten Datenkonzentrators positioniert sind, über eine Multicast-Übertragung erfolgt.

7. Verfahren nach einem der vorhergehenden Ansprüche, bei dem, wenn das mit einem Unternetz verbundene Download-Datum ankommt, jeder Zähler, der in Kommunikationsreichweite eines Datenkonzentrators des genannten Unternetzes positioniert ist, erwacht und ein Hörfenster öffnet, während dessen die Software durch den genannten Datenkonzentrator in den Zähler heruntergeladen wird.

8. Verfahren nach Anspruch 7, bei dem, wenn das Herunterladen der Software in den Zähler korrekt durchgeführt worden ist, der Zähler nicht erwachen wird, wenn er ein Download-Datum für die gleiche Software erneut empfängt.

9. Informationssystem, umfassend eine Verarbeitungskomponente, in der das Verfahren zum Herunterladen nach einem der vorhergehenden Ansprüche durchgeführt wird.

10. Computerprogramm, umfassend Anweisungen, die das Informationssystem nach Anspruch 9 veranlassen, die Schritte des Verfahrens zum Herunterladen nach einem der Ansprüche 1 bis 8 auszuführen.

11. Computerlesbarer Aufzeichnungsträger, auf dem das Computerprogramm nach Anspruch 10 gespeichert ist.

12. Verfahren zum Herunterladen, das in einem Datenkonzentrator durchgeführt wird und dazu bestimmt ist, eine Software in eine Vielzahl von Zählern, die in Kommunikationsreichweite des Datenkonzentrators positioniert sind, heruntergeladen zu werden, umfassend die Schritte:
- Erwerben der Software;
- Erwerben mindestens eines Download-Datums, das einen Tag und eine Uhrzeit umfasst;
wobei die Software und das Download-Datum von einem Server wie z. B. einem Server eines Informationssystems an den Datenkonzentrator übertragen werden;
- Übertragen des Download-Datums an die Zähler;
- wenn das Download-Datum ankommt, Herunterladen der Software in alle Zähler.

13. Verfahren nach Anspruch 12, bei dem der Datenkonzentrator die Software während des Erwerbs des Download-Datums erwirbt.

14. Verfahren nach einem der vorhergehenden Ansprüche, bei dem die Übertragung des Download-Datums an jeden Zähler eine Unicast-Übertragung ist.

15. Verfahren nach einem der vorhergehenden Ansprüche, bei dem das Herunterladen der Software in die Zähler über eine Multicast-Übertragung erfolgt.

16. Verfahren nach einem der vorhergehenden Ansprüche, bei dem, wenn das Download-Datum ankommt, jeder Zähler, der in Kommunikationsreichweite des Datenkonzentrators ist, erwacht und ein Hörfenster öffnet, während dessen die Software von dem Datenkonzentrator in den Zähler heruntergeladen wird.

17. Verfahren nach Anspruch 16, bei dem, wenn das Herunterladen der Software in den Zähler korrekt durchgeführt wurde, der Zähler nicht erwachen wird, wenn er erneut ein Download-Datum für die gleiche Software empfängt.

18. Datenkonzentrator, in dem das Verfahren zum Herunterladen nach einem der Ansprüche 12 bis 17 durchgeführt wird.

19. Computerprogramm, umfassend Anweisungen, die den Datenkonzentrator nach Anspruch 18 veranlassen, die Schritte des Verfahrens zum Herunterladen nach einem der Ansprüche 12 bis 17 durchzuführen.

20. Computerlesbarer Aufzeichnungsträger, auf dem das Computerprogramm nach Anspruch 19 gespeichert ist.

## Claims

1. A downloading method that is performed in a server such as a server of an information system for the purpose of downloading software to a plurality of meters (M1, M2, ..., MN) via a plurality of data concentrators (DC A, DC B, ...), the method comprising the steps of:
· mapping the positions of the meters and of the data concentrators;
· defining a plurality of subnetworks, each comprising a plurality of data concentrators, the meters comprising meters which are each positioned within communication range of data concentrators belonging to several distinct subnetworks ;
· associating each subnetwork with at least one downloading date comprising a day and a time, the downloading date of each subnetwork being different from the downloading dates of the other subnetworks;
· transmitting to the data concentrators of each subnetwork the downloading date associated with said subnetwork so that, when the downloading date associated with said subnetwork is reached, all of the data concentrators of said subnetwork download the software to all of the meters that are positioned within communication range of the data concentrators of said subnetwork.

2. A method according to claim 1, wherein the subnetworks are defined in such a manner that each data concentrator of each subnetwork is positioned outside the communication range of the other data concentrators of said subnetwork.

3. A method according to any preceding claim, wherein the subnetworks are defined in such a manner that each meter is positioned within communication range of at most one data concentrator per subnetwork.

4. A method according to any preceding claim, wherein the software is transmitted to each data concentrator of each subnetwork while transmitting to said data concentrator the downloading date associated with said subnetwork.

5. A method according to any preceding claim, wherein the transmission to each data concentrator of each subnetwork of the downloading date associated with said subnetwork is unicast transmission.

6. A method according to any preceding claim, wherein, for each subnetwork, the downloading of the software by each data concentrator of said subnetwork to the meters that are positioned within communication range of said data concentrator is performed via broadcast transmission.

7. A method according to any preceding claim, wherein, when the downloading date associated with a subnetwork is reached, each meter that is positioned within communication range of a data concentrator of said subnetwork wakes up and opens a listening window during which the software is downloaded to the meter by said data concentrator.

8. A method according to claim 7, wherein, if the software is correctly downloaded to the meter, the meter does not wake up again if it receives a downloading date for the same software.

9. An information system including a processor component that performs the downloading method according to any preceding claim.

10. A computer program including instructions that cause the information system according to claim 9 to execute the steps of the downloading method according to any one of claims 1 to 8.

11. A computer readable storage medium having stored thereon the computer program according to claim 10.

12. A downloading method that is performed in a data concentrator for the purpose of downloading software to a plurality of meters that are positioned within communication range of said data concentrator, the method comprising the steps of:
· acquiring the software;
· acquiring at least one downloading date comprising a day and a time;
the software and the downloading date being transmitted to the data concentrator by a server such as a server of an information system ;
· transmitting the downloading date to the meters;
· when the downloading date is reached, downloading the software to all of the meters.

13. A method according to claim 12, wherein the data concentrator acquires the software while acquiring the downloading date.

14. A method according to claim 12 or claim 13, wherein the downloading date is transmitted to each meter by unicast transmission.

15. A method according to any one of claims 12 to 14, wherein the software is downloaded to the meters via broadcast transmission.

16. A method according to any one of claims 12 to 15, wherein, when the downloading date is reached, each meter that is positioned within communication range of the data concentrator wakes up and opens a listening window during which the software is downloaded to the meter by said data concentrator.

17. A method according to claim 16, wherein, if the software is correctly downloaded to the meter, the meter does not wake up again if it receives a downloading date for the same software.

18. A data concentrator that performs the downloading method according to any one of claims 12 to 17.

19. A computer program including instructions that cause the data concentrator according to claim 18 to execute the steps of the downloading method according to any one of claims 12 to 17.

20. A computer readable storage medium having stored thereon the computer program according to claim 19.
